Europäisches Patentamt

European Patent Office

Office européen des brevets

(19)

(11) Publication number: **0 019 420**
**B1**

(12) **EUROPEAN PATENT SPECIFICATION**

(45) Date of publication of patent specification: **20.07.83**     (51) Int. Cl.³: **B 62 M 3/02**

(21) Application number: **80301503.1**

(22) Date of filing: **08.05.80**

(54) **Cycle gear crank.**

(30) Priority: **10.05.79 JP 62627/79 U**
**23.07.79 JP 102172/79 U**

(43) Date of publication of application:
**26.11.80 Bulletin 80/24**

(45) Publication of the grant of the patent:
**20.07.83 Bulletin 83/29**

(84) Designated Contracting States:
**DE FR GB IT NL**

(56) References cited:
**CH - A - 126 324**
**DE - C - 89 799**
**FR - A - 318 003**

(73) Proprietor: **SHIMANO INDUSTRIAL COMPANY LIMITED**
**77, 3-cho Oimatsu-cho Sakai-shi**
**Osaka (JP)**

(72) Inventor: **Shimano, Keizo**
**3-81 Minamimachi Midorigaoka Sakai-shi**
**Osaka (JP)**

(74) Representative: **Szczuka, Jan Tymoteusz et al,**
**Cruikshank & Fairweather 19 Royal Exchange Square**
**Glasgow G1 3AE Scotland (GB)**

Courier Press, Leamington Spa, England.

Cycle gear crank

This invention relates to a gear crank for a cycle comprising a crank shaft, a pair of crank arms supported at opposite ends of said crank shaft, a chain wheel support means mounted in proximity to one end of the crank shaft, said ends of said crank shaft having supports with generally circular outer peripheries for mounting of said crank arms, said crank arms having elongate arm bodies with bosses at one end, said bosses having generally circular bores for fitting onto said crank shaft supports, and coupling means for holding said crank arms bores and supports against relative rotation therebetween.

In general, racing cycles are variable in separation between the crank shaft axis and the pedal shaft axis according to the physical strength of the rider's legs. Cycles in ordinary use also vary in the above mentioned separation according to the overall size of the cycle.

In a conventional cycle gear crank a support is provided for each crank arm, which is disposed coaxially with the axis of rotation of the crank shaft. Hence, different crank arms of various lengths are required to change the separation between the axis of rotation of the crank shaft and the axis of the pedal shaft.

Not only does the provision of various crank arms increase the number of parts required to be produced and stocked but also the crank arms have to be exchanged in order to vary the abovementioned separation between the crank shaft and the pedal, which is inconvenient for users.

There is known from DE—C—89799 a gear crank for a cycle comprising a crank shaft, a pair of crank arms supported at opposite ends of said crank shaft, a chain wheel support means in proximity to one end of the crank shaft, said ends of said crank shaft having support means with circular outer peripheries for mounting of said crank arms, said crank arms having elongate arm bodies with bosses at one end, said bosses having circular bores for fitting onto said crank shaft support means, and coupling means for holding said crank arm bores and support means against relative rotation therebetween, the central axes of the support means, around which the generally circular peripheries of said support means extend being spaced from the rotational axis of the crank shaft about which said crank shaft rotates in use of the gear crank, and said coupling means being formed and arranged for holding said crank arms on said crank shaft in either of two diametrically opposed predetermined angular dispositions, so as to provide two different spacings between the distal ends of the crank arms and the rotational axis of the crank shaft.

In this known design the coupling means comprises a retractable lug mounted in a cylindrical crank arm bore and engagable in either of two diametrically opposed recesses on an eccentric cylindrical surface. The lug is connected via a mechanical linkage means to an operating lever arranged for alternately disengaging from and engaging with the respective recesses to obtain two different gear ratios during running of the cycle.

It will be noted that the full driving force of the rider is transmitted entirely through the relatively small lug. In addition the continuous engagement and disengagement under conditions of relatively high stress due to the large mechanical advantage encountered at the lug and recesses will lead to rapid wear and failure of these parts. In addition it is necessary, in order to permit the engagement and disengagement to take place, for the chain wheel and crank arms to have a relatively large axial clearance so that the linkage member can move easily therebetween. This means that it is not possible to axially support the chain wheel thereby resulting in a looser fixing thereof with resultant increased wear and loss of drive transmission efficiency.

FR—A—318003 discloses a gear crank for a cycle comprising a crank shaft, a pair of crank arms supported at opposite ends of said crank shaft, a chain wheel support means in proximity to one end of the crank shaft, said ends of said crank shaft having support means with circular outer peripheries for mounting of said crank arms, said crank arms having elongate arm bodies with bosses at one end, said bosses having circular bores for fitting onto said crank shaft support means, and comprising means for holding said crank arm bores and support means against relative rotation therebetween, the central axes of the support means around which the generally circular peripheries of said support means extend, being spaced from the rotational axis of the crank shaft about which said crank shaft rotates in use of the gear crank, and said coupling means being formed and arranged for holding said crank arms on said crank shaft in a plurality of different angular dispositions so as to provide a plurality of different spacings between the distal ends of the crank arms and the rotational axis of the crank shaft.

This known design however does not provide any predetermined angular dispositions of the crank arms on the crank shaft. As a result it is difficult and time consuming to reproduce desired settings with any accuracy or even simply to ensure that the crank arms are diametrically opposed and symmetrically mounted on the crank shaft. The use of a friction coupling also gives rise to the possibility of slippage between the crank arms and crank shaft with undesirable changes in the angular disposition of the crank arms resulting.

It is an object of the present invention to avoid or minimize one or more of the above disadvantages.

The present invention provides a gear crank for a cycle comprising a crank shaft, a pair of crank arms supported at opposite ends of said crank shaft, a chain wheel support means in proximity to one end of the crank shaft, said ends of said crank shaft having support means with generally circular outer peripheries for mounting of said crank arms, said crank arms having elongate arm bodies with bosses at one end, said bosses having generally circular bores for fitting onto said crank shaft support means, and coupling means for holding said crank arm bores and support means against relative rotation therebetween, the central axes of the support means, around which the generally circular peripheries of said support means extend being spaced from the rotational axis of the crank shaft about which said crank shaft rotates in use of the gear crank, and said coupling means being formed and arranged for holding said crank arms on said crank shaft in different predetermined angular dispositions, so as to provide different spacings between the distal ends of the crank arms and the rotational axis of the crank shaft characterised in that the crank arm support means and coupling means for preventing rotation of the crank arms about said support means comprising respective complementary splined connection means on said crank shaft and in said crank arms bores, said splined connection means being formed for interengagement in several different predetermined relative angular positions, and the splined connection means on said crank shaft being substantially rigidly and non-rotatably disposed on said crank shaft.

With a gear crank of the present invention it is possible to provide a number of different effective crank shaft-pedal shaft axis separations with the aid of substantially fewer crank arms thereby reducing the number of parts that have to be produced and stocked. Furthermore, the separation between the axis of the crank shaft and the distal end of each crank arm, is changeable simply and easily as required without the need for replacement of the crank arm whilst avoiding the abovementioned disadvantages of the previously known gear crank.

Further preferred features and advantages of the present invention will appear from the following description given by way of example of some preferred embodiments of the invention illustrated with reference to the accompanying drawings in which:

Figure 1 is a partial sectional elevation of a first embodiment of a gear crank of the invention;

Figures 2 and 3 are views illustrating alternative positions of a crank arm mounted on a support on a crank shaft;

Figure 4 is a right-hand end view of the crank shaft alone of the above embodiments;

Figure 5 is a view showing the locus of a chain wheel mounted on the gear crank in use thereof;

Figure 6 is a sectional elevation of a second embodiment of the invention, corresponding to Figure 1;

Figure 7 is a similar view of a third embodiment;

Figure 8 is a section taken on the line VIII—VIII in Figure 1;

Figure 9 is a sectional view taken on the line IX—IX in Figure 1; and

Figures 10 and 11 are views corresponding generally to Figures 2 and 3, of the third embodiment of Figure 7.

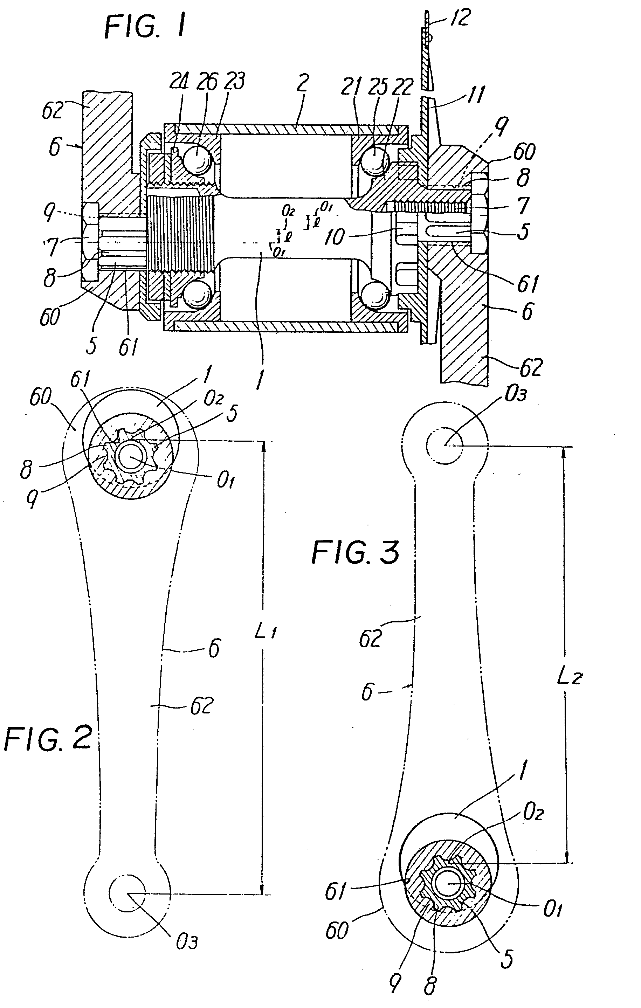

Figures 1 to 3 show a gear crank comprising a crank shaft 1, which is supported rotatably in a tubular bottom bracket 2 of a cycle frame with the aid of ball bearings 25, 26 interposed between a ball race 21 on the bracket 2 and a ball race 22 on the crank shaft 1 and between a ball race 23 at the bracket 2 and a ball holder 24 screw threadedly mounted in the crank shaft 1, respectively.

Both axial ends of the crank shaft 1 are provided with support means in the form of supports 5 formed integrally with the crank shaft 1 and having generally circular outer peripheral surfaces for carrying thereon respective crank arms 6. The supports 5 are radially spaced at their central longitudinal axes $O_1$ from the rotational axis $O_2$ of the crank shaft 1 by a distance $l$ and are provided at their outer peripheral surfaces with a plurality of axially extending ridges which are spaced circumferentially at regular intervals forming a splined connection means.

Each of the crank arms 6 comprises a boss 60 having a mounting bore 61 shaped to fit on the ridged outer surface of a said support 5 and having an arm body 62 extending in one direction from the boss 60. A pedal (not shown) is mounted at the distal end of each arm body 62 on a pedal shaft (not shown) whose rotational axis is indicated at $O_3$.

At the inner peripheral surface of each bore 61 are provided a plurality of complementary ridges 9 which mesh with the ridges 8 on the outer peripheral surface of each support 5, in any one of a plurality of different relative angular dispositions of the crank arm 6 and support 5, the ridges 8, 9 constituting coupling means for retaining the crank shaft 1 and crank arms in different predetermined angular dispositions against relative rotation therebetween.

In the embodiment shown in Figures 1 to 3 both axial ends of the crank shaft 1 are provided with threaded bores coaxial with the supports 5, and headed bolts 7 screw threadedly engage in said bores from the outside of each crank arm 6 thereby to secure the crank arms 6 to the crank shaft 1. Other conventional fixing methods could of course be used instead e.g. nuts engaging with male threaded portions provided at the outer ends of the supports 5.

With the above described embodiment, the spacing of the central axis $O_1$ of each support 5 from the rotational axis $O_2$ of the crank shaft 1 is achieved in the manner described below. The crank shaft 1, as shown in Figure 1, is disposed coaxially with the bottom bracket 2. The ball race 22 on the crank shaft 1 and the ball holder 24 secured thereto are disposed coaxially with the crank shaft 1, and, in turn, the bottom bracket 2, so that the axis of crank shaft 1 coincides with the axis of rotation thereof. The supports 5 are angularly spaced from each other at an angle of 180° around the crank shaft 1 and are radially spaced from the rotational of the crank shaft 1 by an amount $l$.

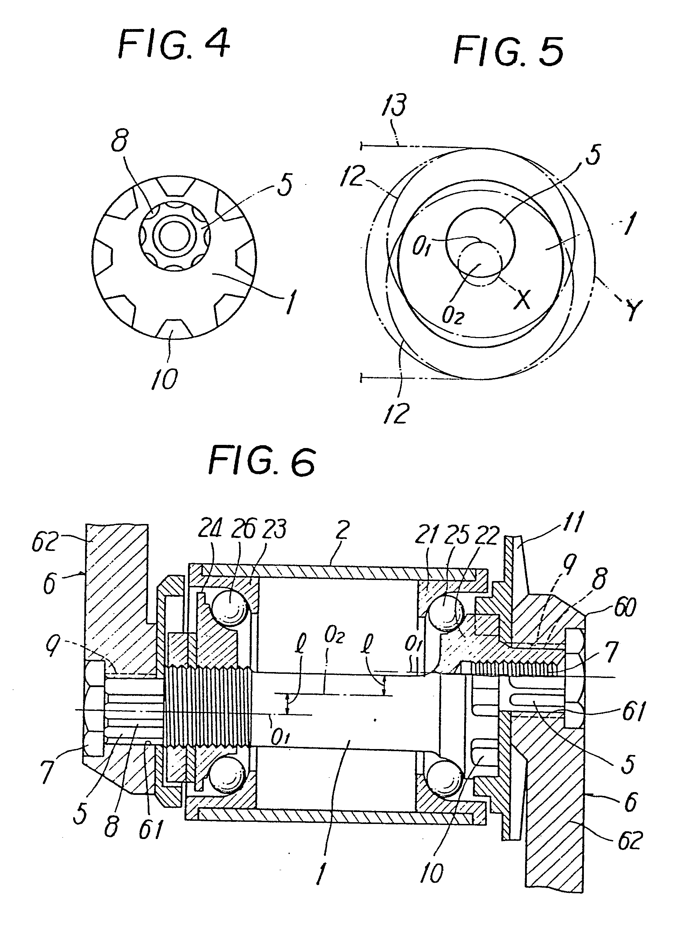

In the embodiment shown in Figure 6, a different method of providing the spacing $l$ of the rotational axis $O_2$ of the crank shaft 1, from the central axes $O_1$ of the supports 5. In this case the central longitudinal axis of the crank shaft 1 is spaced from its rotational axis which coincides with the central axis of the bottom bracket 2, one support 5 being disposed more or less coaxially with the crank shaft 1, and the other support 5 radially spaced from the central longitudinal axis of the crank shaft 1 by a distance of approximately $2l$ and by a distance $l$ from the rotational axis $O_2$ of the crank shaft 1.

A chain wheel or sprocket 12 is mounted at one axial end of the crank shaft 1. The crank shaft 1, as shown in Figure 1, is provided at the outer peripheral surface of one axial end with a plurality of ridges extending generally axially of the crank shaft 1 to provide a chain wheel mounting portion 10 which is coaxial with the rotational axis $O_2$ of the crank shaft 1, a chain wheel mounting means in the form of an adapter 11 being mounted on the mounting portion 10 and held in position by the crank arm 6 which in turn is secured by the bolt 7. The chain wheel 12 is mounted on the outer periphery of the adapter 11. Alternatively, the chain wheel 12 could be mounted on an axially inward end of a respective support 5 at one axial end of the crank shaft 1.

In this case, the central axis $O_1$ of the support 5, as shown in Figure 5, passes along a circular locus $X$ centred around the rotational axis $O_2$ of the crank shaft 1 as the crank arm 6 is pedalled round the chain wheel 12 mounted on the support 5 circling along the circular locus $X$ so that the peripheral gear or sprocket teeth of the chain wheel 12 describe a circular locus $Y$ larger in diameter than the diameter of the chain wheel 12. Hence, a drive chain 13 carried by the chain wheel 12 travels along a locus $Y$ of larger diameter than that of the chain wheel 12 so that the driving force applied to the chain 13 is increased and the speed of the cycle also increased in turn.

The coupling means between the crank arms 6 and crank supports 5 comprising the ridges 8 and 9 is used to permit changing of the angular disposition of the crank arms 6 on the supports 5, the number of different positions available corresponding to the number of ridges 8, 9 on each part.

The change of the angular position of the boss 60 of each crank arm 6 on the support 5 is carried out by removing the bolts 7, withdrawing the crank arms 6 from the supports 5, and thereafter the bosses 60 of the crank arms 6 are turned through the necessary angle and the crank arms 6 replaced on the supports 5 at the desired new angular positions. After changing the positions of the crank arms 6, the bolts 7 are tightened to secure the crank arms 6 to the crank shaft 1.

In Figure 2 the crank arm 6 is shown supported on the support 5 so as to extend along a line (not shown) which extends from the rotational axis $O_2$ of the crank shaft 1 through the central axis $O_1$ of the support 5, i.e., downwardly in Figure 2. The distance $L_1$ between the crank shaft rotational axis $O_2$ and pedal shaft rotational axis $O_3$ is at a maximum in this position.

In contrast the crank arm 6, is shown in Figure 3, as being supported so as to extend along a line (not shown) which extends in the opposite direction i.e. from the support axis $O_1$ through the crank shaft rotational axis $O_2$ i.e. upwardly in Figure 3. The distance $L_2$ between the crank shaft rotational axis $O_2$ and the pedal shaft rotational axis $O_3$ is at a minimum in this position. The length $L_2$ is equal to $L_1$ minus $2l$, where $l$ is the abovementioned spacing.

Each of the crank arms 6 is adjustable in its angular disposition relative to the abovementioned straight lines running through the axes $O_1$ and $O_2$, to provide a plurality of different effective lengths of the crank arm 6 having values in the range from $L_1$ to $L_2$.

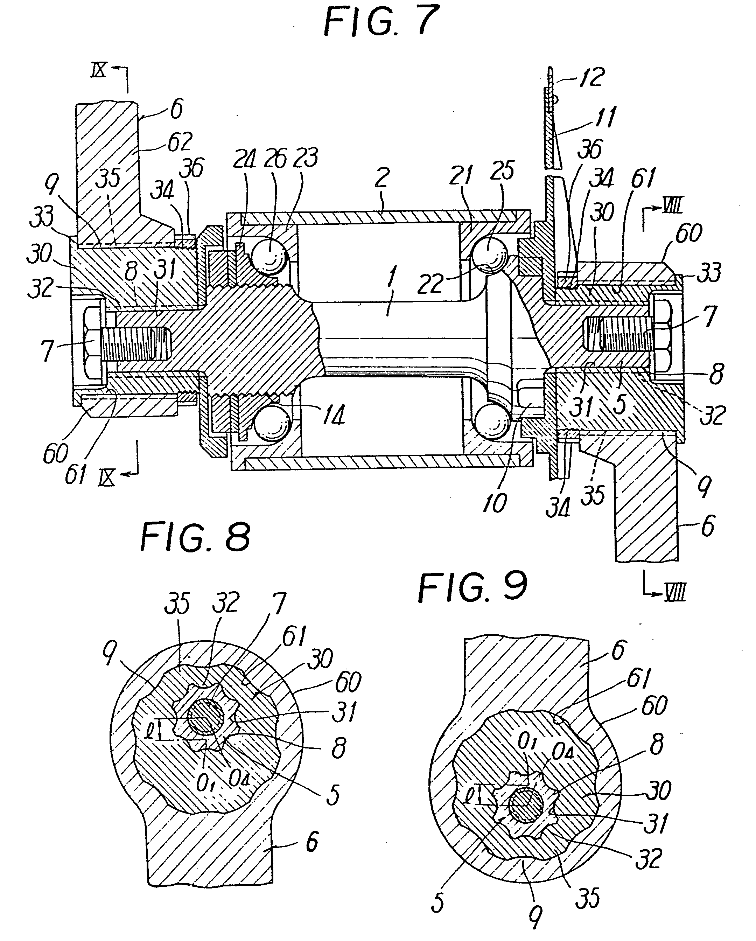

As will be apparent from the above, the supports 5 in the above described embodiment are formed integrally with the crank shaft 1 and spaced at the central axes $O_1$ of their generally circular peripheral surfaces from the rotational axis $O_2$ of the crank shaft 1. In an alternative construction shown in Figures 7 to 9 though, separate intermediate mounting members 30 are used as support means with supports 5 (instead of using supports 5 directly), for providing the generally circular outer peripheral surfaces spaced at their central axes $O_1$ from the crank shaft rotational axis $O_2$.

The mounting members 30 are generally cylindrical with eccentrically disposed axially extending bores formed for mating with supports 5 which are coaxial with the crank shaft 1, each of the bores 31 being spaced by a distance $l$ from the central axis $O_1$ of the mounting member 30 around which axis $O_1$ the peripheral circular surface of the latter is centred. At the inner peripheral surface of each bore 31 are formed complementary ridges 32 for mating with ridges 8 provided on the support 5, for retaining the mounting members 30 against rotation relative to the crank shaft 1. The central axis $O_1$ of the generally circular outer peripheral surface of each mounting member 30 is spaced by a distance $l$ from the rotational axis $O_2$ of the crank shaft 1.

As will be apparent from the above, the mounting members 30 are used to provide the generally circular outer peripheral surfaces in a similar way to that achieved directly by the supports 5 formed integrally with the crank shaft 1 in the embodiment of Figure 1. Thus, the embodiment of Figures 7 to 9 is essentially similar to the former embodiment. For convenience therefore like components in Figures 7 to 11 are identified by like reference numbers.

The ridges 32 in the bore 31 of each mounting member 30 and those 8 on the respective support 5, constitute in this case an additional coupling means. Each mounting member 30 is provided at the outer periphery of one axial end with a flange 33, at the outer periphery of the other axial end with a screw threaded 34, and at the outer periphery of an axially intermediate portion complementary ridges 35 formed for mating with the ridges 9 in the bore 61 in the boss 60 of the crank arm 6, the ridges 35, 9 together constituting a coupling means for connecting the crank arm 6 to the support means constituted by the mounting member 30 and support 5. The screw thread 34 is engaged by a nut 36 having at its outer periphery a rotational drive engagement means i.e. means for allowing application of a force to the nut for rotating it, and secures the crank arm 6 to the mounting member 30.

As an alternative, the screw thread 34 provided on the mounting member 30 could be replaced by an annular groove, into which a generally C-shaped ring is inserted to hold the crank arm 6 on the mounting member 30.

As will be apparent from the above, when the crank arm 6 is mounted on the crank shaft 1 through a mounting member 30, the distance between the rotational axis $O_3$ of pedal shaft at the distal end of the crank arm 6 and the central axis $O_2$ of the crank shaft 1 is readily changeable as in the first-described embodiment.

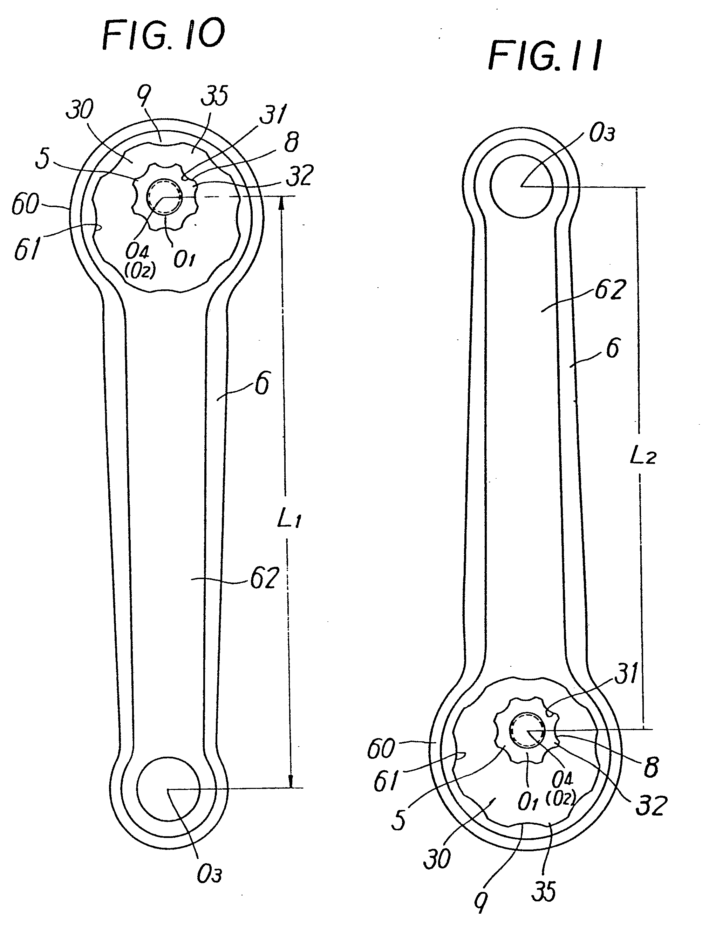

When the crank arm 6 is mounted as shown in Figure 10, so as to extend along a line extending from the central axis $O_4$ of the support 5 which coincides with the rotational axis $O_2$ of the crank shaft 1, towards the central axis $O_1$ of the mounting member 30, in other words, downwardly in Figure 10, the distance $L_1$ between the axes $O_2$ and $O_3$ is at a maximum.

In contrast, when the crank arm 6 is, as shown in Figure 11, mounted to extend in the opposite direction i.e. to extend along a line extending from the central axis $O_1$ of mounting member 30 towards the rotational axis $O_2$ of the crank shaft 1, in other words, upwardly in Figure 11, the distance $L_2$ between the axis $O_2$ and the central axis $O_3$ of the pedal shaft is at a minimum. As in the former embodiment the distance $L_2$ is equal to the length $L_1$ minus $2l$ where $l$ is the spacing of the axis $O_1$ from the

axis $O_2$. Variation of the effective length of the crank arm 6 in the range from $L_1$ to $L_2$ is effected in similar manner to that already described above.

In addition though, the angular disposition of the mounting member 30 on the crank shaft 1 may also be changed (as well as changing of the crank arm 6 position on the mounting member 30).

**Claims**

1. A gear crank for a cycle, comprising a crank shaft (1), a pair of crank arms (6) supported at opposite ends of said crank shaft (1), a chain wheel support means (11) in proximity to one end of the crank shaft (1), said ends of said crank shaft (1) having support means (5, 30) with generally circular outer peripheries for mounting of said crank arms (6), said crank arms having elongate arm bodies (62) with bosses (60) at one end, said bosses having generally circular bores (61) for fitting onto said crank shaft support means (5, 30), and coupling means for holding said crank arm bores (61) and said support means (5, 30) against relative rotation therebetween, the central axes ($O_1$) of the support means (5), around which the generally circular peripheries of said support means (5) extend being spaced from the rotational axis ($O_2$) of the crank shaft (1) about which said crank shaft (1) rotates in use of the gear crank, and said coupling means (8, 9) being formed and arranged for holding said crank arms (6) on said crank shaft (1) in different predetermined angular dispositions, so as to provide different spacings ($L_1$, $L_2$) between the distal ends of the crank arms (6) and the rotational axis ($O_2$) of the crank shaft (1), characterised in that the crank arm support means (5, 30) and coupling means for preventing rotation of the crank arms (6) about said support means (5, 30) comprise respective complementary splined connection means (8/35, 9) on said crank shaft (1) and in said crank arm bores (61), said splined connection means (8/35, 9) being formed for interengagement in several different predetermined relative angular positions, and the splined connection means (8/35) on said crank shaft (1) being substantially rigidly and non-rotatably disposed on said crank shaft (1).

2. A gear crank according to Claim 1 wherein the chain wheel support means (11) is mounted on a chain wheel support mounting means (10) which includes a fixed radially extending axial support surface on said crank shaft (1) and wherein the crank arm (6) is formed and arranged and secured on said crank shaft (1) by fixing means so as to substantially rigidly clamp the chain sheel support means (11) between said crank arm (6) and chain wheel support means axial support surface against axial movement on said crank shaft (1).

3. A gear crank according to Claim 2 where-

in the chain wheel support mounting means (10) includes a male splined connection means formed integrally with said crank shaft (1) for engagement with a complementary female splined connection means in said chain wheel support means (11).

4. A gear crank according to any one of Claims 1 to 3 wherein said splined connection means (35) on said crank shaft (1) are formed as separate mounting portions (30) each having a generally circular periphery and an eccentrically disposed axially extending bore (31), said bore (31) and the outer peripheral surface of the crank shaft portion (5) received therein being provided with an additional complementary coupling means (8, 32) therebetween for retaining the mounting portion (30) against rotation relative to the crank arm support means (5), said crank arm support means (5) being generally circular and coaxial with said crank shaft (1).

5. A gear crank according to Claim 4 wherein the additional complementary coupling means is in the form of complementary splined portions (8, 32).

6. A gear crank according to any one of Claims 1 to 3 wherein said splined connection means (8) on said crank shaft (1) is formed integrally with said crank shaft (1).

7. A gear crank according to any one of Claims 1 to 6 wherein is included a chain wheel (12) mounted on said chain wheel support means (11).

**Revendications**

1. Manivelle de pédalier pour bicyclette, comprenant un arbre de manivelle (1), deux bras de manivelle (6) supportés aux extrémités opposées de l'arbre de manivelle (1), des moyens de support (11) d'une roue à chaînes près d'une extrémité de l'arbre de manivelle (1), les extrémités de l'arbre de manivelle (1) comportant des supports (5, 30) à périphéries externes sensiblement circulaires pour le montage des bras de manivelle (6), les bras de manivelle comprenant des corps de bras allongés (62) munis de bossages (60) à une extrémité, les bossages comportant des alésages (61) sensiblement circulaires pour leur emmanchement sur les supports (5, 30) prévus sur l'arbre de manivelle, et des moyens d'accouplement pour empêcher la rotation relative entre les alésages (61) des bras de manivelle et les supports (5, 30), les axes centraux ($O_1$) des supports (5), autour desquels les périphéries sensiblement circulaires des supports (5) s'étendent, étant espacés de l'axe de rotation ($O_2$) de l'arbre de manivelle (1) autour duquel l'arbre de manivelle (1) tourne pendant l'utilisation de la manivelle de pédalier, et les moyens d'accouplement (8, 9) étant formés et agencés pour maintenir les bras de manivelle (6) sur l'arbre de manivelle (1) dans différentes dispositions angulaires prédéterminées, afin d'obtenir diffé-

rentes distances ($L_1$, $L_2$) entre les extrémités distales des bras de manivelle (6) et l'axe de rotation ($O_2$) de l'arbre de manivelle (1), ladite manivelle de pédalier étant caractérisée en ce que les supports (5, 30) prévus sur l'arbre de manivelle et les moyens d'accouplement qui empêchent la rotation des bras de manivelle (6) autour des supports (5, 30) comprennent des moyens de jonction à cannelures complémentaires respectives (8/35, 9) sur l'arbre de manivelle (1) et dans les alésages (61) de bras de manivelle, les moyens de jonction à cannelures (8/35, 9) étant prévus pour s'engager les uns dans les autres dans plusieurs positions angulaires relatives prédéterminées différentes, les moyens de jonction à cannelures (8/35) prévus sur l'arbre de manivelle (1) étant disposés de façon sensiblement rigide et non rotative sur l'arbre de manivelle (1).

2. Manivelle de pédalier suivant la revendication 1, caractérisée en ce que le support (11) de la roue à chaîne est monté sur des moyens de fixation (10) de support de roue à chaîne qui comprennent une surface de support axiale fixe s'étendant radialement sur l'arbre de manivelle (1), et en ce que le bras de manivelle (6) est formé, agencé et bloqué sur l'arbre de manivelle (1) par des moyens de fixation, de façon à tenir sensiblement rigidement le support (11) de roue à chaîne entre le bras de manivelle (6) et la surface de support axiale du support de roue à chaîne et à empêcher son mouvement axial sur l'arbre de manivelle (1).

3. Manivelle de pédalier suivant la revendication 2, caractérisée en ce que les moyens de fixation (10) du support de roue à chaîne comprennent des moyens de jonction à cannelures mâles formés solidairement avec l'arbre de manivelle (1) de façon à s'engager dans des moyens de jonction complémentaires à cannelures femelles prévus dans le support (1) de roue à chaîne.

4. Manivelle de pédalier suivant l'une quelconque des revendications 1 à 3, caractérisée en ce que les moyens de jonction à cannelures (35) prévus sur l'arbre de manivelle (1) sont constitués par des pièces de fixation séparées (30) ayant chacune une périphérie sensiblement circulaire et comportant un alésage excentré (31) disposé dans la direction axiale, l'alésage (31) et la surface périphérique externe de la partie (5) d'arbre de manivelle reçue dans cet alésage comportant des moyens d'accouplement complémentaires additionnels (8, 32) pour empêcher la rotation relative de la pièce de fixation (30) par rapport au support (5) de bras de manivelle, le support (5) de bras de manivelle étant sensiblement circulaire et coaxial à l'arbre de manivelle (1).

5. Manivelle de pédalier suivant la revendication 4, caractérisée en ce que les moyens d'accouplement complémentaires additionnels sont constitués par des parties cannelées complémentaires (8, 32).

6. Manivelle de pédalier suivant l'une quelconque des revendications 1 à 3, caractérisée en ce que les moyens de jonction à cannelures (8), prévus sur l'arbre de manivelle (1), sont formés solidairement avec l'arbre de manivelle (1).

7. Manivelle de pédalier suivant l'une quelconque des revendications 1 à 6, caractérisé en ce qu'une roue à chaîne (12) est montée sur le support (11) de roue à chaîne.

**Patentansprüche**

1. Fahrradantriebskurbel mit einer Kurbelwelle (1), einem Paar an deren entgegengesetzten Enden abgestützter Kurbelarme (6), eine Kettenradhalterung (11) nahe einem Ende der Kurbelwelle (1), wobei diese Enden der besagten Kurbelwelle (1) Befestigungsmittel (5, 30) mit allgemein kreisförmigen Aussenumfang zum Anbringen dieser Kurbelarme (6) aufweisen, welche längliche Armkörper (62) mit Augen (60) an einem Ende besitzen, wobei diese Augen allgemein kreisförmige Bohrungen (61) zum Anbau auf jene Kurbelwellenbefestigungsmittel (5, 30) enthalten, und mit Verbindungsmitteln, um diese Kurbelarmbohrungen (61) und Befestigungsmittel (5, 30) gegenseitig drehfest zu halten, wobei die Mittelachsen $(O_1)$ der Befestigungsmittel (5), um welche herum deren allgemein kreisförmiger Umfang verläuft, auf Abstand von der Drehachse $(O_2)$ der Kurbelwelle (1) liegen, um welche herum sich diese beim Gebrauch der Antriebskurbel dreht, und wobei diese Verbindungsmittel (8, 9) so ausgebildet und angeordnet sind, dass sie diese Kurbelarme (6) auf jener Kurbelwelle (1) in verschiedenen vorbestimmten Winkelstellungen halten, um verschiedene Abstände $(L_1, L_2)$ zwischen den Aussenenden der Kurbelarme (6) und der Drehachse $(O_2)$ der Kurbelwelle (1) zu ermöglichen, dadurch gekennzeichnet, dass die Kurbelarmbefestigungsmittel (5, 30) bzw. die der Verhinderung einer Drehung der Kurbelarme (6) um diese Befestigungsmittel (5, 30) dienenden Verbindungsmittel jeweils komplementäre Kerbverzahnungen (8/35, 9) auf jener Kurbelwelle (1) bzw. in jenen Kurbelarmbohrungen (61) aufweisen, wobei diese Kerbverzahnungen (8/35, 9) für gegenseitigen Eingriff in mehreren verschiedenen, jeweils vorbestimmten Winkelstellungen ausgebildet sind, und die Kerbverzahnung (8/35) auf dieser Kurbelwelle (1) darauf im wesentlichen starr und drehfest angeordnet ist.

2. Antriebskurbel nach Anspruch 1, worin die Kettenradhalterung (11) auf einer Kettenradhalterungsstütze (10) angebracht ist, welche eine feststehende, radial verlaufende axiale Stützfläche auf dieser Kurbelwelle (1) einschliesst, und worin der Kurbelarm (6) so ausgebildet, angeordnet und auf dieser Kurbelwelle (1) durch Rastmittel gesichert ist, dass die Kettenradhalterung (11) zwischen diesem Kurbelarm (6) und der axialen Stützfläche für die Kettenradhalterung gegen Axialbewegung auf jener Kurbelwelle (1) gesichert eingespannt ist.

3. Antriebskurbel nach Anspruch 2, worin die Kettenradhalterungsstütze (10) eine mit dieser Kurbelwelle (1) einstückig geformte, vorspringende Kerbverzahnung zum Eingriff mit einer komplementären ausgenommenen Kerbverzahnung in jener Kettenradhalterung (11) aufweist.

4. Antriebskurbel nach einem der Ansprüche 1 bis 3, worin diese Kerbverzahnung (34) auf jener Kurbelwelle (1) als getrennte Lagerungsteile (30) jeweils mit einem allgemein kreisförmigen Umfang und einer exzentrisch angeordneten, sich axial erstreckenden Bohrung (31) ausgebildet ist, wobei diese Bohrung (31) und die darin aufgenommene Aussenumfangsfläche des Kurbelwellenteils (5) mit zusätzlichen komplementären Verbindungsmitteln (8, 32) dazwischen versehen sind, um den Lagerungsteil (30) gegenüber den Kurbelarmbefestigungsmitteln (5) drehfest zu halten, die allgemein kreisförmig und koaxial mit dieser Kurbelwelle (1) sind.

5. Antriebskurbel nach Anspruch 4, worin die zusätzlichen komplementären Verbindungsmittel die Gestalt komplementärer Kerbverzahnungsteile (8, 32) aufweisen.

6. Antriebskurbel nach einem der Ansprüche 1 bis 3, worin diese Kerbverzahnungen (8) auf jener Kurbelwelle (1) damit einstückig geformt sind.

7. Antriebskurbel nach einem der Ansprüche 1 bis 6, welche ein auf dieser Kettenradhalterung (11) angebrachtes Kettenrad (12) einschliesst.

FIG. 1

FIG. 2

FIG. 3

**FIG. 4**

**FIG. 5**

**FIG. 6**

# FIG. 7

# FIG. 8

# FIG. 9

# FIG. 10

# FIG. 11